(19) Europäisches Patentamt
European Patent Office
Office européen des brevets

(11) **EP 2 418 154 A1**

(12) **EUROPEAN PATENT APPLICATION**

(43) Date of publication:
**15.02.2012 Bulletin 2012/07**

(51) Int Cl.:
*B65B 57/02* (2006.01)    *B65B 61/18* (2006.01)
*G01N 21/90* (2006.01)

(21) Application number: **10172438.3**

(22) Date of filing: **10.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Tetra Laval Holdings & Finance S.A.**
**1009 Pully (CH)**

(72) Inventor: **Montorsi, Maurizio**
**41123 Modena (IT)**

(74) Representative: **Jorio, Paolo et al**
**Studio Torta S.p.A.**
**Via Viotti, 9**
**10121 Torino (IT)**

(54) **Method and unit for detecting the effective position of an opening device applied onto a sealed package**

(57)    There is described a method for detecting the effective position of an opening device (2) applied onto a sealed package (4) comprising the steps of: detecting opening device (2) along a first and a second direction (A, B) associated to theoretical position of opening device (2); detecting the presence of package (4) along a third direction (C, D) which is incident to a travelling direction of package (4); generating a first parameter ($\Delta T_1$) associated to a first interval between a first time ($t_1$) in which package (4) is detected and a second time ($t_2$) in which opening device (2) is detected; generating a second parameter ($\Delta T_2$) associated to a second interval between second time ($t_2$) and a third time ($t_3$) in which opening device (2) is detected; generating a third parameter ($\Delta T_{REF}$) associated to the speed ($V_{REF}$) of package (4) along a fourth direction (Y); detecting the value of a first distance and a second distances ($\Delta Y$, $\Delta X$) measured along a fourth and a fifth direction (Y, X) between corresponding points of opening device (2) arranged into effective and theoretical positions, on the basis of first, second and third parameter ($\Delta T_1$, $\Delta T_2$, $\Delta T_{REF}$).

FIG. 2

**Description**

The present invention relates to a method and to a unit for detecting the effective position of an opening device applied onto a sealed package.

As is known, many food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material.

A further typical example of package is the so-called "gable-top", which comprise a parallelepiped main body and a top end portion which is formed by two sloping walls joined at a top sealing strip.

The packaging material has a multilayer structure substantially comprising a base layer for stiffness and strength, which may, in turn, comprise a layer of fibrous material, e.g. paper, or of mineral-filled polypropylene material; and a number of layers of heat-seal plastic material, e.g. polyethylene film, covering both sides of the base layer.

In the case of aseptic packages for long-storage products, such as UHT milk, the packaging material also comprises a layer of gas- and light-barrier material, e.g. aluminium foil or ethyl vinyl alcohol (EVOH), which is superimposed on a layer of heat-seal plastic material, and is in turn covered with another layer of heat-seal plastic material forming the inner face of the package eventually contacting the food product.

As is known, packages of this sort are produced on fully automatic packaging machines, on which a continuous tube is formed from the web-fed packaging material; the web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; and the web of packaging material so sterilized is maintained in a closed, sterile environment, and is folded and sealed longitudinally to form a vertical tube.

The tube is filled continuously downwards with the sterilized or sterile-processed food product, and is sealed and then cut along equally spaced cross sections to form pillow packs, which are then fed to a folding unit to form the finished, e.g. substantially parallelepiped-shaped packages.

Alternatively, the packaging material may be cut into blanks, which are formed into packages on forming spindles, and the packages are filled with the food product and sealed. One example of this type of package is the so-called "gable-top" package known by the trade name Tetra Rex (registered trademark).

To open the packages described above, various solutions of opening devices have been proposed.

A first solution of opening device comprises a patch defined by a small sheet of a heat-seal plastic material, and which is heat sealed over a respective hole on the side of the web eventually forming the inside of the package; and a pull-off tab applied to the opposite side of the packaging material and heat sealed to the patch. The tab and patch adhere to each other, so that, when the tab is pulled off, the portion of the patch heat sealed to it is also removed to uncover the hole.

Alternatively, a second solution comprises closable opening devices which are applied by injecting plastic material directly onto the holes of the web.

Finally, a third solution of opening device comprises a frame defining an opening and fitted about a pierceable or removable portion of the packaging material.

The pierceable portion of the package may be defined by a so-called "prelaminated" hole, i.e. a hole formed in the base layer only and covered by the other lamination layers, including the layer of gas-barrier material.

More precisely, the web is provided with a plurality of prelaminated holes in a packaging material factory and then fed to the packaging machine.

Opening devices may be applied either onto the top wall of already formed packages or moulded onto the web before that packages are formed.

In both the cases, it is of the utmost importance within the industry to accurately check that the opening device is correctly positioned relative to the top wall of the package.

In particular, with reference to the third solution of the opening device, it is of the utmost importance to check that opening device is fitted about the removable portion within a very strict tolerance.

To this purpose, it has been proposed to use a camera to visually inspect the effective position of the opening device relative to the removable portion.

Due to the fact that the camera is highly expensive and/or is highly sensible to the color of the opening device, it has been proposed to use a group of photocells to detect the effective position of the opening device relative to the position of the removable portion.

More precisely, it has been proposed to use:

- a first photocell emitting a first radiation along a first direction which is orthogonal to the travelling direction of the package; and
- a pair of second photocells, which emit respective second radiations parallel to the first direction.

As the package advances along the travelling direction, the first photocell detects the presence of the opening device while the second photocells detect the presence of a lateral side of the package.

The distance between the second radiations is less than the length of the lateral side of the package

In case the opening device is spaced from the removable portion by less than a threshold value, the first photocell detects the presence of the opening device at the same time that the second photocells detect the presence of the package.

On the contrary, in case the opening device is spaced from the removable portion by more than the threshold value, when the first photocell detects the presence of the opening device, one of the second photocell no longer detects the presence of the package.

The above described assembly of first and second photocells is only capable of detecting whether or not the opening device is spaced from the removable portion more than the threshold value along the travelling direction of the packages.

Furthermore, the accuracy of the detection carried out by the assembly of photocells is quite rough. For example, the minimum distance which can be detected between the effective position of the opening device and the removable portion is of about 5 mm.

A need is felt within the industry to measure the distance between the effective position of the opening device and the position of the removable portion.

A need is also felt within to industry to measure the distance between the effective position of the opening device and the position of the removable portion, both along the travelling direction and along a direction which is orthogonal to the travelling direction.

A need is finally felt within the industry to increase the sensibility in the detection of the effective position of the opening device relative to the removable portion.

It is an object of the present invention to provide a method for detecting the effective position of an opening device applied onto a sealed package, designed to meet at least one of the above-identified requirement.

According to the present invention, there is provided a method for detecting the effective position of an opening device applied onto a sealed package, as claimed in Claim 1.

The present invention also relates to a unit for detecting the effective position of an opening device applied onto a sealed package, as claimed in claim 8.

A preferred, non-limiting embodiment of the present invention will be described by way of example with reference to the accompanying drawings, in which:

Figure 1 is a frontal view of a first embodiment of a unit for detecting the effective position of an opening device applied onto a sealed package, according to the present invention;
Figure 2 is a top view of the unit of Figure 1;
Figure 3 is a frontal view of the first embodiment of the unit of Figure 1, in a set-up step;
Figures 4 to 8 schematically show subsequent steps of a method for detecting the effective position of an opening device onto a package, according to the present invention;
Figure 9 is an enlarged view of the top wall of a package processed by unit of Figures 1 to 3;
Figures 10 and 11 schematically show the position of opening device during two different steps of the method according to the present invention;
Figure 12 is a perspective view of a second embodiment of the unit of Figures 1 and 3; and
Figure 13 is a perspective view of the second embodiment of the unit, in a set-up step.

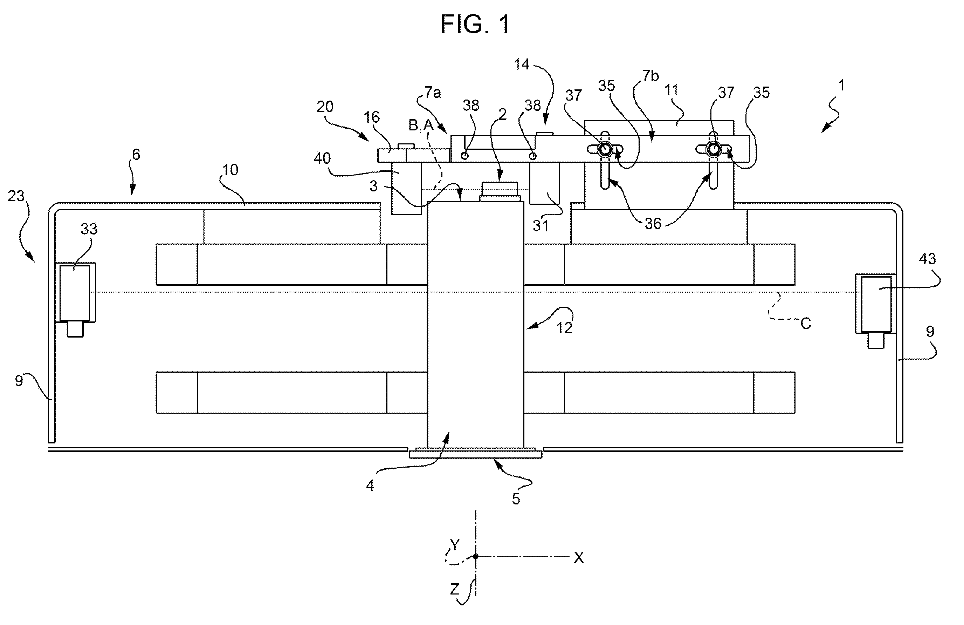

Number 1 in Figure 1 indicates as a whole a unit for detecting the effective position of an opening device 2, which is applied onto a top wall 3 of a package 4.

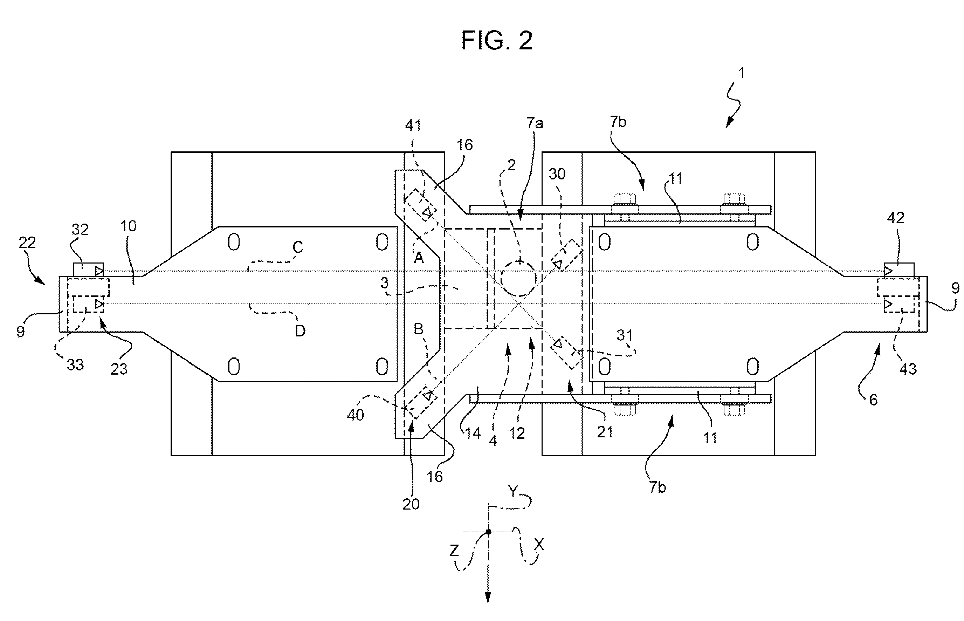

Each package 4 is, in the embodiment shown in Figures 1 and 2, parallelepiped-shaped and sealed. As a result, top wall 3 is horizontal.

Packages 4 preferably contain a pourable food product, such as pasteurized or UHT milk, fruit juice, wine, etc.

Packages 4 may also contain a food product, which is pourable within a tube of packaging material when producing packages 4, and sets after packages 4 are sealed. One example of such a food product is a portion of cheese, which is melted when producing packages 4 and sets after packages 4 are sealed.

The tube is formed in known manner upstream from unit 1 by longitudinally folding and sealing a known web (not shown) of heat-seal sheet material, which comprises a layer of paper material covered on both sides with layers of heat-seal plastic material, e.g. polyethylene. In the case of an aseptic package 4 for long-storage products, such as UHT milk, the packaging material comprises a layer of oxygen-barrier material, e.g. aluminium foil, which is superimposed on one or more layers of heat-seal plastic material eventually forming the inner face of package 4 contacting the food product.

The tube of packaging material is then filled with the food product for packaging, and is sealed and cut along equally spaced cross sections to form a number of pillow packs (not shown), which are then transferred to a folding unit where they are folded mechanically to form respective packages 4.

In the embodiment shown, opening device 2 is fitted about a removable portion (not shown) of the packaging material.

The removable portion is defined by a so-called "pre-laminated" hole, i.e. a hole formed in the base layer only and covered by the lamination layers, including the layer of gas-barrier material.

Opening devices 2 are applied onto the top wall 3 of respective packages 4 downstream from the folding unit.

Alternatively, opening devices 2 are molded onto the web of sheet material before the folding of the tube and the subsequent formation of packages 4.

In both the cases, unit 1 is fed with packages 4 onto which respective opening devices 2 have been previously applied.

With particular reference to Figures 1 to 3, unit 1 substantially comprises:

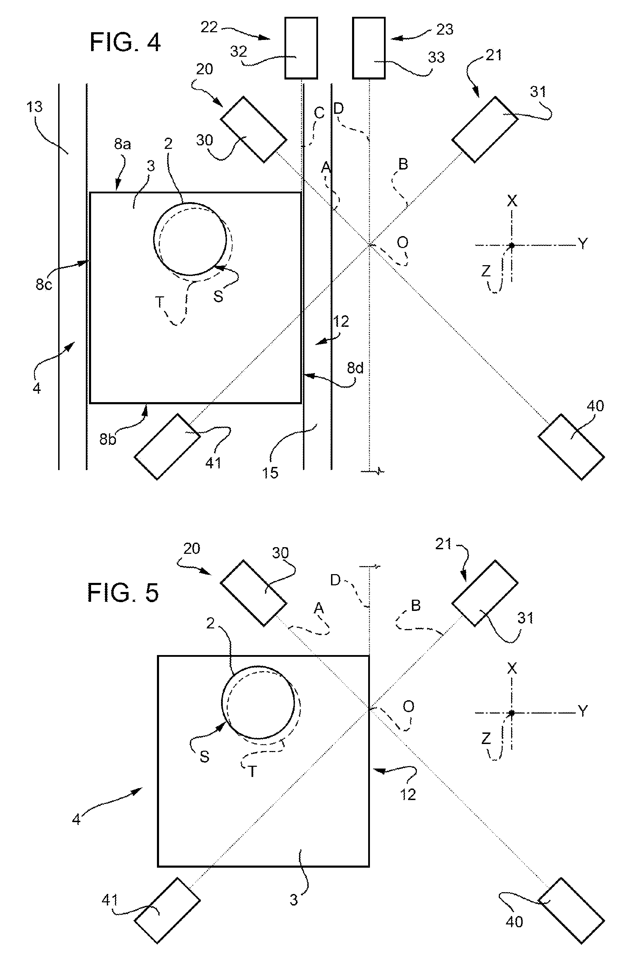

- a linear conveyor 5 for advancing a sequence of packages 4 provided with respective opening devices 2 along a direction Y;
- a package transfer unit which comprises, for each package 4, a pair of cyclically movable bars 13, 15 (Figure 4) cooperating respectively with the rear and the frontal wall of relative package 4 to thrust it along direction Y;
- a fixed portal 6;
- a supporting structure 7a; and
- a pair of arms 7b which are adjustably connected to portal 6 and from which supporting structure 7a protrudes.

In detail, portal 6 comprises, in turn:

- a pair of substantially vertical lateral walls 9 which are spaced apart along a direction X which is orthogonal to direction Y;
- a substantially horizontal top wall 10 integral with and extending between walls 9, and arranged at least partially over conveyor 5; and
- a pair of substantially vertical sidewalls 11 which protrude from wall 10 on the opposite side of conveyor 5 and are parallel to each other.

Structure 7a comprises a plate 14 and a pair of appendices 16 which diverge from one another and protrudes from plate 14 on the opposite side of sidewalls 11.

Each arm 7b substantially extends along direction X and comprises:

- a first portion which is adjustably and releasably connected to relative sidewall 11; and
- a second portion which is releasably connected to a relative lateral side of plate 14.

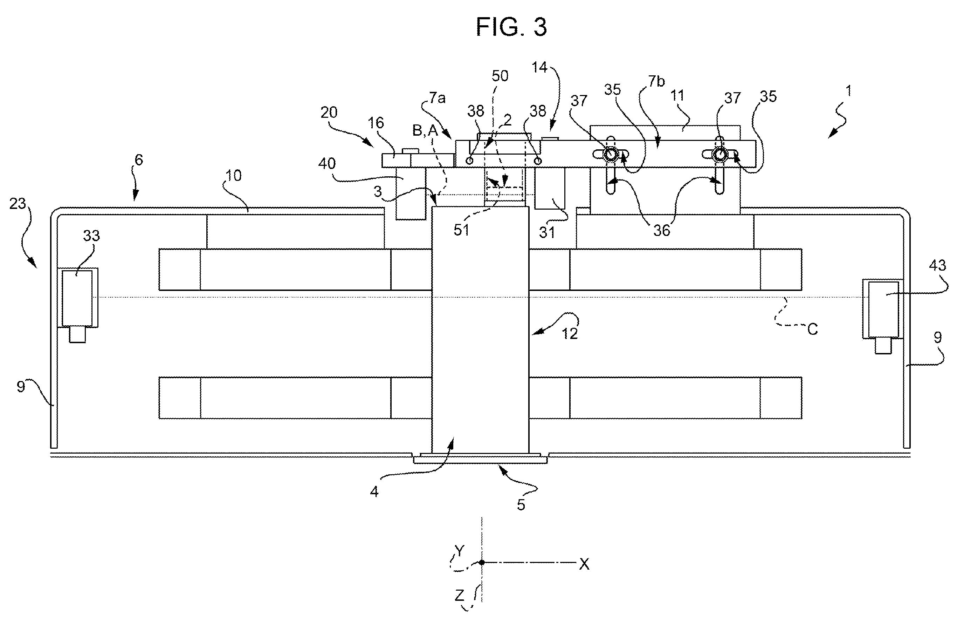

Top wall 3 (figures 3 to 5) of each package 4 is bounded by a pair of opposite edges 8a, 8b parallel to each other, and by a pair of edges 8c, 8d parallel to each other and which extend orthogonally between edges 8a, 8b.

Edge 8c is arranged upstream from edge 8d, with reference to traveling direction of package 4 along direction Y.

As package 4 is advanced over conveyor 5 along direction Y, edges 8a, 8b are parallel to direction Y and edges 8c, 8d are parallel to direction X.

In the embodiment shown, the centre of opening device 2 is nearer to edge 8a than to edge 8b.

In figures 4 to 9, letter S indicates an outer profile of an opening device 2 which is arranged into the effective position.

Differently, letter T indicates an outer profile of an opening device 2 which is arranged in a theoretical reference position, in which it is fitted during a calibration step.

Unit 1 advantageously comprises:

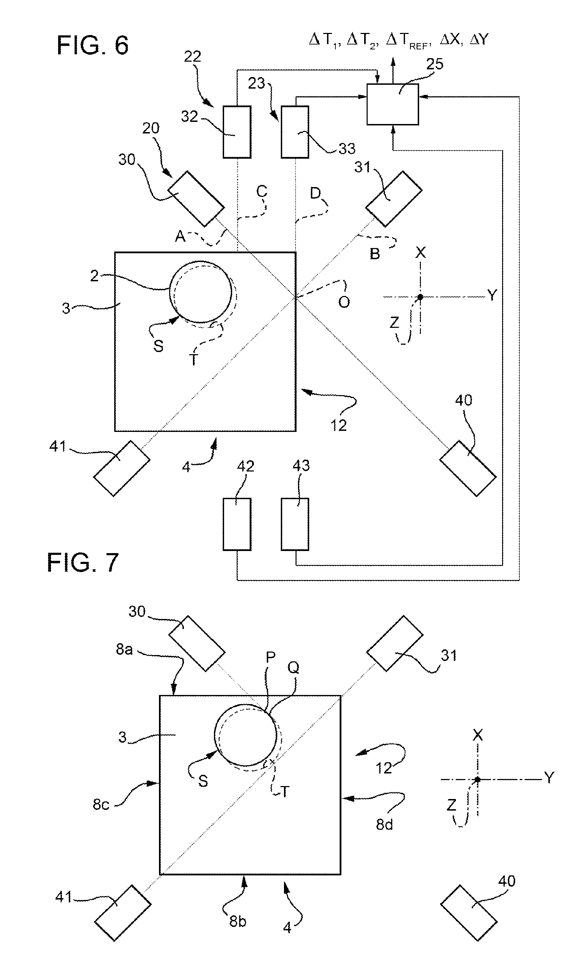

- a sensor 20 which is adapted to detect, in use, the presence of opening device 2 along a direction A, which is associated to the theoretical position of opening device 2;
- a sensor 21 which is adapted to detect, in use, the presence of the opening device 2 along a direction B, which is associated to the theoretical position of opening device 2;
- a sensor 23 which is adapted to detect, in use, the presence of package 4 along a direction D, which is transversal to direction Y; and
- a control unit 25 (only schematically shown in Figure 6) configured for:

  generating a first parameter $\Delta T_1$ associated with a first time interval between a time $t_1$, in which sensor 23 begins to detect the presence of package 4 along direction D, and a time $t_2$, in which sensor 20 begins to detect the presence of opening device 2 along direction A;
  generating a second parameter $\Delta T_2$ associated with a second time interval between time $t_2$ and a third time $t_3$, in which sensor 21 begins to detect the presence of opening device 2 along direction B;
  generating a third parameter $\Delta T_{REF}$, associated to the speed $V_{REF}$ of package 4 along direction Y; and
  detecting, on the basis of at least two of the first, second and third parameter $\Delta T_1$, $\Delta_2$, $\Delta T_{REF}$, a distance $\Delta Y$ measured along direction Y and a distance $\Delta X$ measured along direction X between corresponding points P, Q of opening device 2 arranged into effective and theoretical reference position.

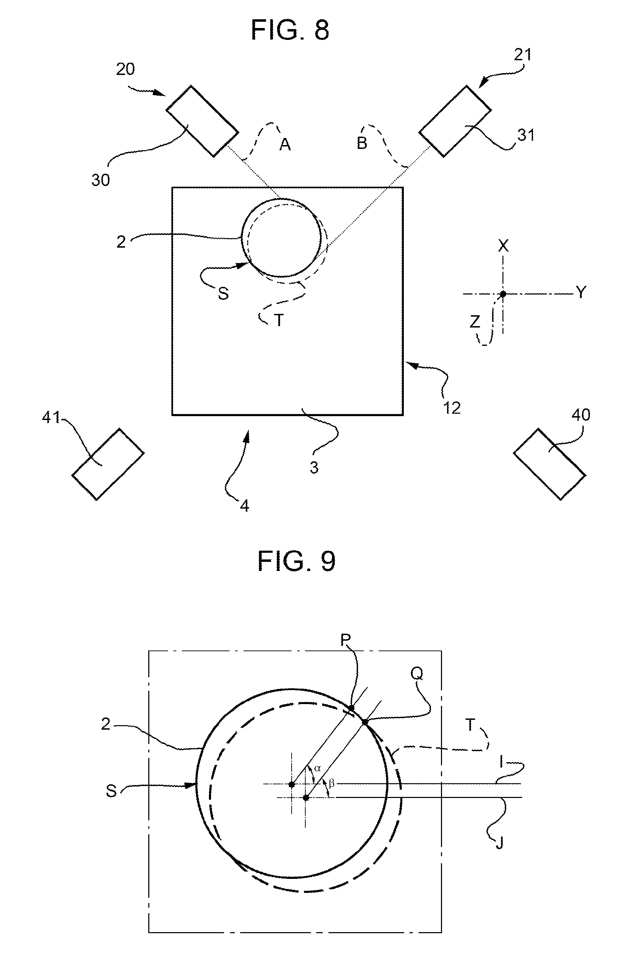

Corresponding points P, Q are, in the present description, points P, Q of outer profiles S, T which define relative arches $\alpha$, $\beta$ of the same amplitude with relative fixed directions I, J, which are horizontal and parallel to direction Y in the embodiment shown (Figure 9).

In the embodiment shown, control unit 25 detects the distances $\Delta Y$, $\Delta X$ along respective directions Y, X between:

- point P of outer profile S to which direction A is tangent; and
- point Q of outer profile T to which direction A is tangent.

Unit 1 also comprises a sensor 22 which is adapted to detect, in use, the presence of package 4 along a direction C which is parallel to and staggered from direction D.

Direction D is, in the embodiment shown, arranged downstream from direction C, with reference to the advancing direction of package 4 along direction Y.

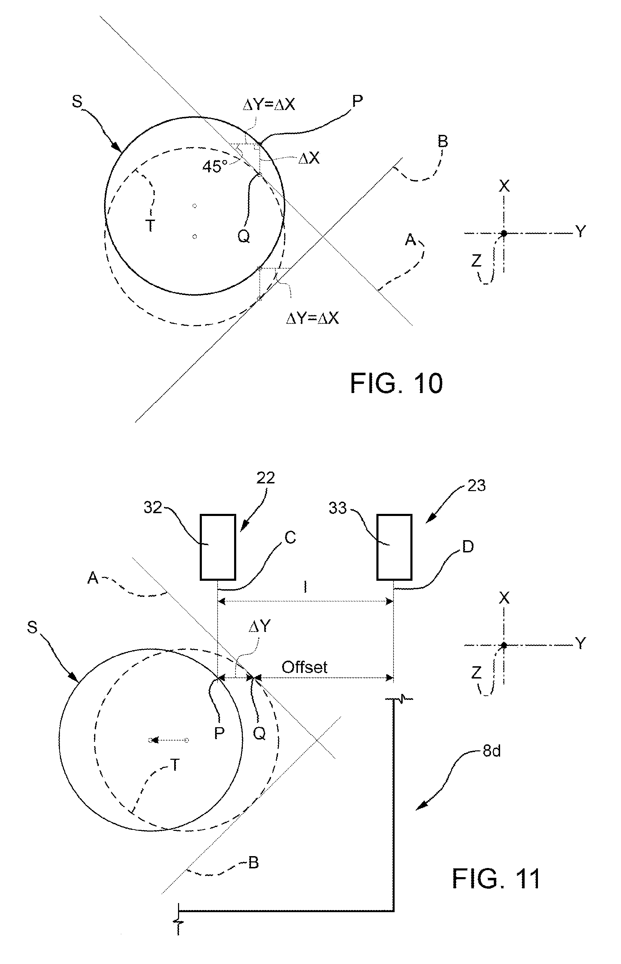

Accordingly, sensor 22 begins to detect opening device 2 at a time $t_0$ which is before times $t_1$, $t_2$ and $t_3$. However, this is not necessary for carrying out the invention. Sensor 22 is used for establishing a reference time $T_{REF}$ or reference velocity $V_{REF}$, which is calculated if a distance $l$ (Figure 10) between the sensors 22, 23 is known. The reference velocity $V_{REF}$ can also be measured in other ways, not shown.

Directions A, B are tangent to outer profile T of opening device 2 when arranged in the theoretical reference position.

Directions C, D are orthogonal to direction Y and parallel to direction X.

In particular, directions A, B, D intersect each other in the same point O (Figure 6). However, this is not necessary for carrying out the invention.

Directions A and B are, in the embodiment shown, symmetrical to direction Y.

Furthermore, directions A, B are, in the embodiment shown, orthogonal to each other.

As a consequence, directions A, B define with directions Y and X angles each of 45 degrees.

Control unit 25 is functionally connected with sensors 20, 21, 22, 23 in order to generate the first, second and third parameter $\Delta T_1$, $\Delta T_2$, $\Delta T_{REF}$.

Furthermore, control unit 25 calculates:

- distance $\Delta X$, on the basis of parameters $\Delta T_2$, $\Delta T_{REF}$ only; and
- distance $\Delta Y$, on the basis of parameters $\Delta T_1$, $\Delta T_{REF}$ and on the basis of a parameter OFFSET.

In particular, parameter OFFSET (Figure 10) equals the distance along direction Y between point Q of theoretical reference profile T and edge 8d. Parameter OFFSET is measured in a set-up or calibration step of unit 1.

In the embodiment shown, parameter $\Delta T_1$ coincides with the length of the interval between times $t_1$ and $t_2$, parameter $\Delta T_2$ coincides with the length of the interval between times $t_2$ and $t_3$, and parameter $\Delta T_{REF}$ coincides with the inverse of the value of speed $V_{REF}$.

In particular, the parameter $\Delta T_{REF}$ is evaluated on the basis of the distance $l$ (figure 10) between directions C, D and the difference between times $t_0$ and $t_1$.

More precisely,

$$\Delta T_{REF} = \frac{1}{V_{REF}} = \frac{t_1 - t_o}{l}$$

In other words, $\Delta T_{REF}$, equals the time taken by package 4 to move along a unitary distance.

Control unit 25 calculates $\Delta X$ on the basis of the following expression:

$$\Delta X = \frac{\Delta T_2}{2 \cdot \Delta T_{REF}}$$

The above expressions may be justified, considering that, in case that distance $\Delta X$ is zero, time $t_2$ coincides with time $t_3$.

On the contrary, in case that distance $\Delta X$ is non-zero and that point P of profile S is closer to edge 8a than point Q of profile T, time $t_2$ comes before time $t_3$, and vice versa.

As shown in Figure 10, the distance covered from point P relative to point Q between times $t_2$ and $t_3$ equals 2*$\Delta Y$.

Therefore:

$$2 \cdot \Delta Y = (t_3 - t_2) \cdot V_{REF} = \frac{\Delta T_2}{\Delta T_{REF}}$$

Due to the fact that directions A, B are orthogonal to each other and define an angle of 45 degrees with direction Y, $\Delta Y$ and $\Delta X$ may be regarded as the catheti of an isosceles right-angled isosceles triangle (shown in Figure 10). As a consequence $\Delta X$ is equal to $\Delta Y$ and:

$$\Delta X = \Delta Y = \frac{\Delta T_2}{2 \cdot \Delta T_{REF}}$$

Furthermore, control unit 25 calculates $\Delta Y$ on the basis of the following expression:

$$\Delta Y = \frac{\Delta T_1}{\Delta T_{REF}} - OFFSET - \Delta X$$

The above expression may be explained in the following way.

In case that points P, Q of relative profiles S, T are spaced each other only along direction Y (Figure 11), $t_2$ coincides with $t_3$, and therefore $\Delta T2$ equals to zero.

Accordingly, in this case, point P of profile S moves along direction Y of a length OFFSET+$\Delta Y$ between times $t_1$ and $t_2$.

Therefore, in case that $\Delta X$ equals to zero:

$$\Delta Y = \frac{\Delta T_1}{\Delta T_{REF}} - OFFSET$$

However, if point P is spaced from Q also along direction X, for example if point P is closer than point Q to edge 8a, $\Delta X$ must be removed from $\Delta Y$.

Therefore:

$$\Delta Y = \frac{\Delta T_1}{\Delta T_{REF}} - OFFSET - \Delta X$$

Each sensor 20, 21, 22, 23 substantially comprises, in the embodiment shown:

- an emitter 30, 31, 32, 33 of an electromagnetic radiation, a laser radiation in the embodiment shown, along respective direction A, B, C, D;
- a receiver 40, 41, 42, 43 of the electromagnetic radiation emitted by emitter 30, 31, 32, 33 along direction A, B, C, D.

Emitters 30, 31 are carried by respective supports which downwards protrude from appendices 16 while receivers 40, 41 are carried by respective supports which downwards protrude from plate 14.

As it is arranged along direction A, B, opening device 2 interrupts the transmission of the electromagnetic radiation between emitter 30, 31 and corresponding receiver 40, 41 at times $t_2$, $t_3$.

In a complete analogous way, as it is arranged along direction C, D, a frontal wall 12 of package 4 interrupts the transmission of electromagnetic radiation between emitter 32, 33 and corresponding receiver 42, 43 respectively at times $t_0$, $t_1$.

In particular, edge 8d in common between walls 3, 12 of package 4.

The first portion of each arm 7b comprise two slots 35 which extend along direction X and each sidewall 11 comprise two slots 36 which extend along a direction Z, which is orthogonal to the plane defined by directions X, Y (Figures 1 and 3).

Each slot 36 is superimposed to a relative slot 35.

Furthermore, a pair of bolts 37 extend along direction Y, pass each through a relative slot 35 and a relative slot 36, and connect an arm 7b to a corresponding sidewall 11.

In this way, the position of arm 7b relative to corresponding sidewall 11 may be adjusted along directions X, Z, depending on the shape of package 4 and/or opening device 2 and on the position of opening device 2 onto wall 3.

Furthermore, the position of arm 7b relative to corresponding sidewall 11 may be adjusted along direction Y in a not-shown manner.

Furthermore, two bolts 38 connect the second portion of each arm 7b to a relative side of plate 14.

As shown in Figure 3, plate 14 comprises a through hole 50, which houses, in a set-up step of unit 1, a cylindrical bushing 51.

More precisely, through-hole 50 extends along an axis which is parallel to direction Z (Figure 3).

In the set-up or calibration step of unit 1, bushing 51 is fitted within hole 50, so that it protrudes downwards from plate 14.

Furthermore, it is selected a package 4 which has the respective opening device 2 arranged in the theoretical reference position, where such opening device 2 is normally located, if applied properly. However, since there is a deviation in the location of the prelaminated hole, a corresponding deviation should be detected in the location of opening device 2. A deviation from the theoretical reference position is hence not necessarily something bad.

Package 4 is advanced by package transfer unit, i.e. by corresponding bars 13, 15, up to it is below hole 50.

At this stage, the position of arms 7b is adjusted relative to sidewalls 11 along directions X, Z and, if necessary along direction Y, so that opening device 2 of selected package 4 is housed within bushing 51.

Due to the movement of arms 7b relative to sidewalls 11, sensors 20, 21 are automatically arranged in a position, in which, directions A, B are tangent to outer profile of opening device 2 of selected package 4, and therefore, to outer profile T.

At this stage, the distance between point Q and edge 8d along direction Y is known. The parameter OFFSET equals such a distance.

The set-up operation of unit 1 is completed and bushing 51 is removed from hole 50 (Figure 1).

The subsequent operation of unit 1 is described with reference to a single package 4 and to an opening device 2 applied on wall 3 of this package 4 in the effective position.

At first sensor 22 detects the passage of wall 12 of package 4 along direction C (Figure 4) at time $t_0$.

Subsequently, sensor 23 detects the passage of wall 12 of package 4 along direction D at time $t_1$ (Figure 5).

Control unit 25 evaluates the value of speed $V_{REF}$ of package 4, on the basis of distance *1* between sensors 22, 23 and of the length of interval between times to and $t_1$.

In particular, control unit 25 evaluates the speed $V_{REF}$ of the package 4 as the ratio between 1 and $t_1$ and $t_0$, where 1 is the distance along direction Y between sensors 23, 22.

Control unit 25 also generates parameter $\Delta T_{REF}$ which equals the difference between times $t_0$ and $t_1$, and, therefore, equals the time taken by package 4 to cover a unitary distance along direction Y.

Subsequently, outer profile S of opening device 2 is detected by sensor 20 at time $t_2$ and by sensor 21 at time $t_3$.

Control unit 25 generates parameter $\Delta T_1$ which equals the length of the interval between time $t_1$ and $t_2$,

and parameter $\Delta T_2$ which equals the length of the interval between time $t_2$ and $t_3$

In case that point P of profile S is closer to edge 8a than point Q of profile T, time $t_2$ comes before time $t_3$, and vice versa.

In case that points P, Q are at the same distances from edge 8a, i.e. in case that $\Delta X$ equals zero, time $t_2$ coincides with time $t_3$.

In any case, control unit 25 calculates $\Delta Y$ and $\Delta X$ through the following expressions:

$$\Delta X = \frac{\Delta T_2}{2 \cdot \Delta T_{REF}};$$

$$\Delta Y = \frac{\Delta T_1}{\Delta T_{REF}} - OFFSET - \Delta X.$$

In case one or both the values $\Delta Y$, $\Delta X$ exceed relative threshold value, package 4 is discarded. Specifically, if the values $\Delta Y$, $\Delta X$ differ too much from the corresponding deviation for the prelaminated hole, the package 4 is discarded.

In case that a given number of packages 4 is discarded, the operation of unit 1 is terminated.

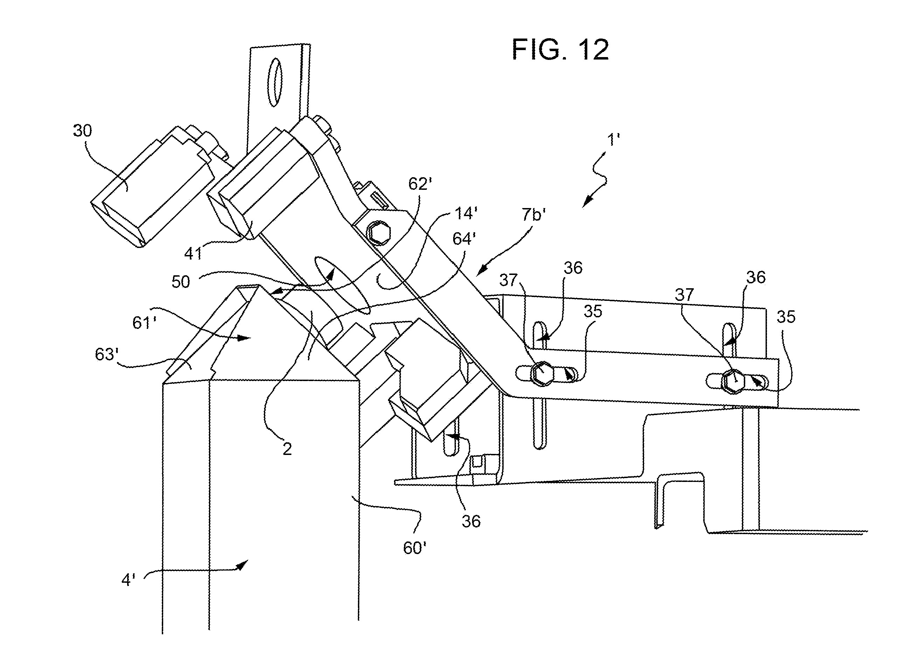

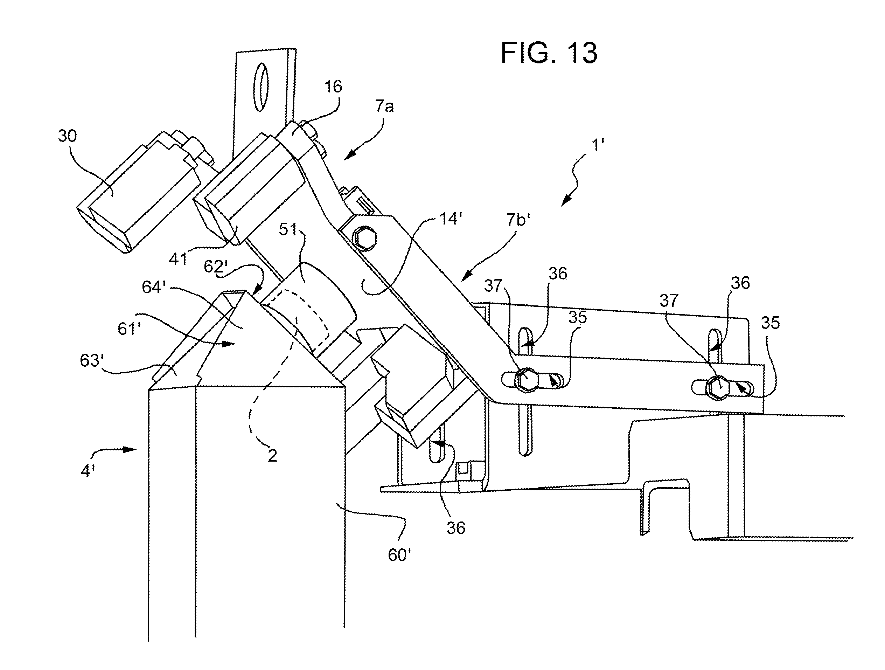

Number 1' in Figures 12 and 13 indicates a second embodiment of a unit in accordance with the present invention; unit 1, 1' being similar to each other, the following description is limited to the differences between them, and using the same references, where possible, for identical or corresponding parts.

Unit 1' differs from unit 1 in that the second portion of each arm 7b' is sloped relative to the relative first portion.

More precisely, second portion of each arm 7b' upwards projects from the corresponding second first and is, therefore, sloped relative to directions X and Y.

Second portion of each arm 7b' extends, therefore, at increasing distance from conveyor 5, proceeding from first portion of such arm 7b' on the opposite sides of sidewalls 11.

Furthermore, plate 14' differs from plate 14 in that it is sloped relative to the plane defined by direction X and Y.

More precisely, plate 14' extends substantially parallel to arms 7b'.

Unit 1' is adapted to detect the effective position of an opening device 2 applied onto a package 4' which is different from package 4.

More precisely, package 4' is a so-called "gable top package", which comprises a parallelepiped main body 60' and a top end portion 61' formed by two sloping walls 62', 63' joined at a sealing strip.

Opening device 2 is applied to wall 62'.

Top portion 61' also comprises two triangular lateral walls 64' interposed between walls 61', 62'.

The operation of unit 1' is substantially similar to the one of unit 1 and is not, therefore, described in detail.

The advantages of the method and of unit 1, 1' according to the present invention will be clear from the foregoing description.

In particular, unit 1, 1', differently from the photocells assembly described in the introductory part of the present description, detects the precise value of the distances $\Delta Y$, $\Delta X$ respectively along directions Y, X between the effective position of the opening device 2 and the theoretical reference position defined by outer profile T.

Furthermore, the Applicant has found that unit 1, 1" are capable of detecting very narrow distances $\Delta Y$, $\Delta X$ with respect to the photocells assembly described in the introductory part of the present description. For example, unit 1, 1' are capable of detecting distances $\Delta Y$, $\Delta X$ of about 1 mm, corresponding to very small displacements of the opening devices 2 from the reference position. This is particularly advantageous when opening devices 2 are fitted about a removable portion of the packaging material defined by a "so-called" pre-laminated hole.

Unit 1, 1' is also capable of detecting when opening device 2 has not been applied at all onto relative package 4.

Finally, the operation of unit 1, 1' is not affected by the color of opening device 2, which conversely may penalize the efficiency of visual system, like cameras.

In this case, the electromagnetic radiations emitted by emitters 30, 31 are not interrupted.

Clearly, changes may be made to unit 1, 1' and to the method without, however, departing from the protective scope defined in the accompanying Claims.

**Claims**

1. A method for detecting the effective position of an opening device (2) applied onto a sealed package (4) relative to a theoretical reference position of said opening device (2) onto said package (4), **characterized by** comprising the steps of:

   - detecting the presence of said opening device (2) along a first and a second direction (A, B) which are associated to said theoretical position of said opening device (2), by using respectively a first and a second sensor (20, 21);
   - detecting the presence of said package (4) along a third direction (C, D) which is incident to a travelling direction of said package (4), by using a third sensor (23);
   - generating a first parameter ($\Delta T_1$), which is associated to a first interval between a first time ($t_1$) in which said package (4) begins to be detected by said third sensor (23) and a second

time ($t_2$) in which said opening device (2) begins to be detected by said first sensor (20);

- generating a second parameter ($\Delta T_2$), which is associated to a second interval between said second time ($t_2$) and a third time ($t_3$) in which said opening device (2) begins to be detected by said second sensor (21);

- generating a third parameter ($\Delta T_{REF}$), which is associated to the speed ($V_{REF}$) of said package (4) along a fourth direction (Y);

- detecting the value of a first distance ($\Delta Y$) measured along said fourth direction (Y) between corresponding points (P, Q) of said opening device (2) arranged respectively into said effective and theoretical position, on the basis of at least two of said first, second and third parameter ($\Delta T_1$, $\Delta T_2$, $\Delta T_{REF}$); and

- detecting the value of a second distance ($\Delta X$) measured along a fifth direction (X) transversal to said fourth direction (Y) between said corresponding points (P, Q) of said opening device (2) arranged into said effective and theoretical position, on the basis of at least two of said first, second and third parameter ($\Delta T_1$, $\Delta T_2$, $\Delta T_{REF}$).

2. Method according to claim 1, **characterized in that** said step of detecting the presence of said opening device (2) along said first and second direction (A, B) comprises the step of detecting the presence along said first and second direction (A, B) of a first outer profile (S) of said opening device (2) arranged in the effective position;

said first and second direction (A, B) being tangent to a second outer profile (T) of an opening device arranged in the theoretical position.

3. Method according to claim 1 or 2, **characterized in that** said step of detecting the presence of said opening device (2) along said first and second direction (A, B) comprises the step of detecting the presence of said opening device (2) along said first and second direction (A, B) which are symmetrical in respect of said fourth direction (Y).

4. Method according to anyone of previous claim, **characterized by** comprising the step of detecting the presence of said package (4) along a sixth direction (D) which is transversal to said fourth direction (Y), by using a fourth sensor (22);

said step of measuring a third parameter ($\Delta T_{REF}$) being carried out on the basis of the length of a third interval between:

- a fourth time ($t_0$) in which said package (4) begins to be detected by a fourth sensor (22); and
- said first time ($t_1$).

5. A method according to anyone of previous claims, **characterized in that** said step of detecting the presence of the opening device (2) along a first and a second direction (A, B) comprises the step of emitting a first and a second radiation along respectively said first and second direction (A, B);

said step of detecting the presence of said package (4) along a third direction (C, D) comprising the step of emitting a third radiation along said third direction (C).

6. The method of anyone of previous claim, **characterized by** comprising a set-up step, which, in turn, comprises the sub-steps of:

- selecting a reference package (4) having the relative opening device (2) in said theoretical position;
- adjusting the position of a support structure (7a) which carries said first and second sensor (20, 21) relative to a fixed structure (6); and
- arranging said opening device (2) of said reference package (4) in a given position with respect to said support structure (7a), so that said first and second sensor (20, 21) are tangent to an outer profile (T) of said opening device (2) of said reference package (4).

7. The method of claim 6, **characterized in that** said set-up step comprises the further sub-step of measuring a fourth parameter (OFFSET) associated to the distance of a given point (Q) of said reference package (4) from an edge (8d) of said reference package (4);

at least one of said step of detecting the value of said first and/or said second distance ($\Delta Y$; $\Delta X$) being carried out on the basis also of said fourth parameter (OFFSET).

8. A unit (1, 1') for detecting the effective position of an opening device (2) applied onto a sealed package (4), comprising:

- a first and a second sensor (20, 21) which are adapted to detect, in use, the presence of said opening device (2) respective along a first and a second direction (A, B) which are associated to the theoretical position of said opening device (2);
- a third sensor (23) which is adapted to detect, in use, the presence of said package (3) along a third direction (C, D) which is transversal to a travelling direction of said package (4); and
- a control unit (25) configured for generating a first parameter ($\Delta T_1$) associated to a first interval between a first time ($t_1$) in which said third sensor (23) begins to detect the presence of said package (3) along said third direction (C) and a second time ($t_2$) in which said first sensor (20) begins to detect the presence of said opening device (2) along said first direction (A);

said control unit (25) being configured for generating a second parameter ($\Delta T_2$) associated to a second interval between said second time ($t_2$) and a third time ($t_3$) in which said second sensor (21) begins to detect the presence of said opening device (2) along said second direction (B);
said control unit (25) being further configured for generating a third parameter ($\Delta T_{REF}$) associated to the speed ($V_{REF}$) of said package (4) along a fourth direction (Y);
said control unit (25) being configured for detecting, on the basis of at least two between said first, second and third parameter ($\Delta T_1$; $\Delta T_2$; $\Delta T_{REF}$), a first distance ($\Delta Y$) measured along said fourth direction (Y) and a second distance ($\Delta X$) measured along a fifth direction (X) transversal to said fourth direction (Y) between corresponding points (P, Q) of said opening device (2) arranged into effective and theoretical position.

9. The unit according to claim 8, **characterized by** comprising a fourth sensor (22) which is adapted to detect, in use, the presence of said package (4) along a sixth direction (C) which is parallel to and staggered from said third direction (D).

10. The unit according to claim 9, **characterized in that** said first and second direction (A, B) are symmetrical with respect to said fourth direction (Y).

11. The unit according to anyone of claims 9 to 10, **characterized in that** said first, second and third sensor (20, 21, 23) emit, in use, respective radiations respectively along said first, second and third direction (A, B, C).

12. The unit according to anyone of claim 8 to 11, **characterized by** comprising:

    - advancing means (13, 15) for advancing along said fourth direction (Y) a succession of said packages (4) onto which respective opening devices (2) have been applied;
    - a fixed first structure (6) onto which said third sensor (23) is mounted; and
    - a second structure (7b) onto which said first and second sensor (20, 21) are mounted;

    said first and second structure (6; 7a, 7b) being adjustably connected each other at least along said fourth and fifth direction (Y, X), so that the positions of said first and second sensor (20, 21) are adjustable relative to said fixed structure (6).

13. The unit of claim 12, **characterized in that** said second structure (7a; 7b) comprises a seat (50) which is adapted to house an opening device (2) of a reference package (4) during a set-up step of such unit (1, 1').

# FIG. 1

EP 2 418 154 A1

# FIG. 2

EP 2 418 154 A1

FIG. 3

EP 2 418 154 A1

FIG. 4

FIG. 5

# FIG. 6

$\Delta T_1, \Delta T_2, \Delta T_{REF}, \Delta X, \Delta Y$

# FIG. 7

# FIG. 8

# FIG. 9

FIG. 10

FIG. 11

FIG. 12

FIG. 13

EP 2 418 154 A1

EP 2 418 154 A1

Europäisches
Patentamt

European
Patent Office

Office européen
des brevets

# EUROPEAN SEARCH REPORT

Application Number

EP 10 17 2438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 172 299 A1 (TETRA LAVAL HOLDINGS & FINANCE [CH]) 16 January 2002 (2002-01-16) * paragraph [0051] - paragraph [0053]; figures 4,5 * ----- | 1-13 | INV. B65B57/02 B65B61/18 G01N21/90 |
| A | US 2009/066944 A1 (GAUFFRE CHRISTOPHE [FR] ET AL) 12 March 2009 (2009-03-12) * paragraph [0064] - paragraph [0081]; figure 1 * ----- | 1-13 | |
| A | EP 1 462 369 A1 (TETRA LAVAL HOLDINGS & FINANCE [CH]) 29 September 2004 (2004-09-29) * paragraphs [0032], [0033]; figure 1 * ----- | 1-13 | |

| | | |
|---|---|---|
| | | TECHNICAL FIELDS SEARCHED (IPC) |
| | | B65B G01N |

The present search report has been drawn up for all claims

| Place of search | Date of completion of the search | Examiner |
|---|---|---|
| Munich | 11 March 2011 | Lawder, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 17 2438

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2011

| Patent document cited in search report | | Publication date | Patent family member(s) | | Publication date |
|---|---|---|---|---|---|
| EP 1172299 | A1 | 16-01-2002 | AT | 240239 T | 15-05-2003 |
| | | | AU | 3367001 A | 21-01-2002 |
| | | | AU | 8765701 A | 21-01-2002 |
| | | | DE | 60002708 D1 | 18-06-2003 |
| | | | DE | 60002708 T2 | 18-03-2004 |
| | | | DK | 1172299 T3 | 15-09-2003 |
| | | | WO | 0204312 A1 | 17-01-2002 |
| | | | WO | 0204295 A1 | 17-01-2002 |
| | | | ES | 2198269 T3 | 01-02-2004 |
| | | | JP | 2004502607 T | 29-01-2004 |
| | | | PT | 1172299 E | 30-09-2003 |
| US 2009066944 | A1 | 12-03-2009 | EP | 2016397 A1 | 21-01-2009 |
| | | | FR | 2901022 A1 | 16-11-2007 |
| | | | WO | 2007128888 A1 | 15-11-2007 |
| EP 1462369 | A1 | 29-09-2004 | WO | 2004085261 A2 | 07-10-2004 |

For more details about this annex : see Official Journal of the European Patent Office, No. 12/82